# EUROPÄISCHE PATENTSCHRIFT

(11) **EP 1 367 059 B1**
(45) Veröffentlichungstag und Bekanntmachung des Hinweises auf die Patenterteilung: **02.02.2005**
(21) Anmeldenummer: 03009379.3
(22) Anmeldetag: 25.04.2003
(51) Int. Cl.: C07F 7/18, B60C 1/00, C08K 5/00, C08L 21/00

(54) **Organosiliciumverbindungen, Verfahren zu ihrer Herstellung und ihre Verwendung**
Organosilicon compounds, their preparation and use
Composés organosiliciques, leur préparation et utilisation

(30) Priorität: 28.05.2002 DE 10223658
(43) Veröffentlichungstag der Anmeldung: 03.12.2003
(73) Patentinhaber: Degussa AG, 40474 Düsseldorf (DE)
(72) Erfinder: Krafczyk, Roland, Dr., 79618 Rheinfelden (DE); Deschler, Ulrich, Dr., 63877 Sailauf (DE); Luginsland, Hans-Detlef, Dr., 07030 Hoboken, New-Jersey (US); Reimund, Pieter, Dr., 64625 Bensheim (DE); Hasse, Andre, 52441 Linnich (DE); Mayer, Melanie, 79618 Rheinfelden (DE)

(56) Entgegenhaltungen:
- EP-A- 1 285 926

## Beschreibung

Die Erfindung betrifft Gemische von Organosiliciumverbindungen, ein Verfahren zu ihrer Herstellung sowie ihre Verwendung.

Es ist bekannt, Silane als Haftvermittler einzusetzen. So werden Aminoalkyltrialkoxysilane, Methacryloxyalkyltrialkoxysilane, Polyoulfanalkyltrialkoxysilane und Mercaptoalkyltrialkoxysilane als Haftvermittler zwischen anorganischen Materialen und organischen Polymeren, als Vernetzungsmittel und Oberflächenmodifizierungsmittel eingesetzt (E.P. Plueddemann, "Silane Coupling Agents", 2^{nd} Ed. Plenum Press 1982).

Diese Haftvermittler beziehungsweise Kupplungs- oder Verbindungsageniien bilden sowohl zum Füllstoff als auch zum Elastomer Bindungen und bewirken somit zwischen der Füllstoffoberfläche und dem Elastomer eine gute Wechselwirkung.

Desweiteren ist bekannt, daß die Verwendung von handelsüblichen Silanhaftvermittlern (DE 22 55 577) mit drei Alkoxysubstituenten am Siliciumatom zur Freisetzung beträchtlicher Mengen an Alkohol während und nach der Anbindung an den Füllstoff führt. Da in der Regel Trimethoxy- und Triethoxy-substituierte Silane eingesetzt werden, werden die entsprechenden Alkohole, Methanol und Ethanol, in erheblichen Mengen freigesetzt.

Ferner ist aus DE 10015309 bekannt, dass die Verwendung eines Mercaptosilans in Kombination mit einem langkettigen Alkylsilan zu Gummimischungen mit einer erhöhter Verstärkung und einem erniedrigten Hystereseverlust führt. Das Alkylsilan ist notwendig, um eine sichere Verarbeitbarkeit der Kaütschukmischung zu gewährleisten.

Ein Nachteil der bekannten Mercaptosilane gemäß DE 10015309 ist der notwendige Zusatz von Alkylsilanen zu Kautschukmischungen um bestimmte Eigenschaften zu erhalten.

Es ist weiterhin bekannt, daß Methoxy- und Ethoxysubstituierte Silane reaktiver sind als die entsprechenden langkettigen Alkoxy-substituierten Silane und somit schneller än den Füllstoff anbinden können, so daß auf den Einsatz von Methoxy- und Ethoxy-Substituenten aus technischer und wirtschaftlicher Sicht nicht verzichtet werden kann

Aus EP 1 285 926 sind Organosiliciumverbindungen der allgemeinen Formel 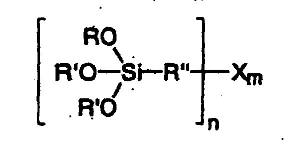 oder 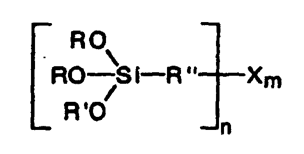 bekannt,
wobei R eine Methyl- oder Ethyl-Gruppe ist,
R' gleich oder verschieden und eine C₉-C₃₀ verzweigte oder unverzweigte einbindige Alkyl- oder Alkenyl-Gruppe, Arylgruppe, Aralkylgruppe, verzweigte oder unverzweigte C₂-C₃₀ Alkylethergruppe, verzweigte oder unverzweigte C₂-C₃₀ Alkylpolyethergruppe ist,
R" eine verzweigte oder unverzweigte, gesättigte oder ungesättigte, aliphatische, aromatische oder gemischt aliphatische /aromatische zweibindige C₁-C₃₀ Kohlenwasserstoffgruppe ist,
X ist NH₍₃₋ₙ₎ mit n=1,2,3 und m=1, O(C=O)-R''' mit n=1 und m=1, SH mit n=1 und m=1, S mit n=2 und m=1-10 und Gemische davon, S(C=O)-R''' mit n=1 und m=1 oder H mit n=1 und m=1,
mit R''' gleich C₁-C₃₀ verzweigte oder unverzweigte Alkyl- oder Alkenyl-Gruppe, Aralkylgruppe oder Arylgruppe.

Ein Nachteil der bekannten Organosiliciumverbindungen gemäß EP 1 285 926 ist die niedrige Härte und dynamische Steifigkeit in Kautschukmischungen.

Aufgabe der Erfindung ist es, eine Organosiliciumverbindung zur Verfügung zu stellen, mit der in Kautschukmischungen gute Härten und dynamische Steifigkeiten erzielt werden kann.

Eine weitere Aufgabe der Erfindung ist es, eine Organosiliciumverbindung zur Verfügung zu stellen, mit der in Kautschukmischungen auch ohne Zusatz von Alkylsilanen vergleichbare Eigenschaften zu den in DE 10015309 erzielt werden kann.

Gegenstand der Erfindung sind Gemische von Organosiliciumverbindungen der allgemeinen Formel I und / oder II 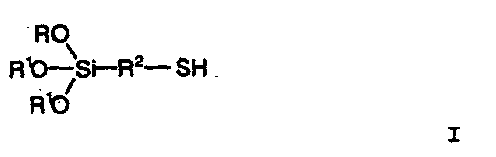 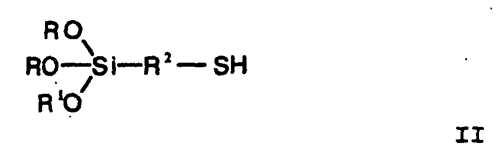 wobei R eine Methyl- oder Ethyl-Gruppe ist,
R¹ gleich oder verschieden und eine C₉-C₃₀ verzweigte oder unverzweigte einbindige Alkylgruppe ist,
R² eine verzweigte oder unverzweigte, gesättigte oder ungesättigte, aliphatische, aromatische oder gemischt aliphatische /aromatische zweibindige C₁-C₃₀ Kohlenwasserstoffgruppe ist,
welche dadurch gekennzeichnet sind, daß das Gemisch verschiedene Komponenten mit unterschiedlichen R'-Gruppen enthält und der Anteil einer Komponente des Gemisches 10 bis 50 Mol-%, vorzugsweise 10 bis 40 Mol-%, besonders bevorzugt 15 bis 30 Mol-%, beträgt.

R¹ kann beispielsweise aus 10 bis 50 Mol-% C₁₄H₂₉ und 90 bis 50 Mol-% C₁₂H₂₅ oder aus 10 bis 50 Mol-% C₁₈H₃₇ und 90 bis 50 Mol-% C₁₆H₃₃ bestehen. R¹ kann auch aus mehr als zwei verschiedenen R¹ bestehen.

R² kann CH₂, CH₂CH₂, CH₂CH₂CH₂, CH₂CH₂CH₂CH₂, CH(CH₃), CH₂CH(CH₃), C(CH₃)₂, CH(C₂H₅), CH₂CH₂CH(CH₃), CH₂CH(CH₃)CH₂ oder 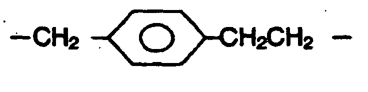 bedeuten.

Ein weiterer Gegenstand der Erfindung ist ein Verfahren zur Herstellung von Gemische von Organosiliciumverbindungen der allgemeinen Formel I und / oder II, welches dadurch gekennzeichnet ist, daß man Silane der allgemeinen Formel III 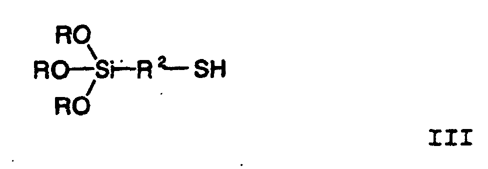 in der R und R² die oben angegebene Bedeutung aufweisen, mit Gemischen von Alkoholen der allgemeinen Formel R¹-OH , in der R¹ die oben angegebene Bedeutung aufweist und als Gemisch mindestens zweier Alkohole eingesetzt wird (R¹ verschieden ist), unter Abspaltung von R-OH, umsetzt und R-OH durch Destillation kontinuierlich vom Reaktionsgemisch abtrennt.

Es können beispielsweise Alkoholgemische von 10 bis 50 Mol-% C₁₄H₂₉OH und 90 bis 50 Mol-% C₁₂H₂₅OH oder Alkoholgemische von 10 bis 50 Mol-% C₁₈H₃₇OH und 90 bis 50 Mol-% C₁₆H₃₃OH eingesetzt werden. Es können auch Alkoholgemische mit mehreren Komponenten (R¹) verwendet werden.

Als Alkoholgemische R¹-OH können beispielsweise Lorol Spezial oder Stenol 1618 (Cetyl-/stearylalkohol) des Herstellers Cognis oder Ecorol 68/50 (Cetylstearylalkohol) des Herstellers Ecogreen Oleochemicals eingesetzt werden.

Bei dem erfindungsgemäßen Verfahren kann ein Gemisch entstehen, bei dem keine, eine, zwei oder drei der RO-Gruppen durch R¹O-Gruppen ersetzt sind. Das Verhältnis der RO- zu R¹O-Gruppen kann durch das molare Verhältnis des Silans der allgemeinen Formel III zu dem Alkohol der Formel R¹-OH bestimmt werden. Beispielsweise kann durch Umsetzung von zwei Moläquivalenten des Alkoholgemisch der Formel R¹-OH mit einem Moläquivalent des Silans der allgemeinen Formel III ein Gemisch von Organosiliciumverbindungen mit einer mittleren Zusammensetzung gemäß der Formel I erhalten werden. Beispielsweise kann durch Umsetzung von einem Moläquivalenten des Alkoholgemischs der allgemeinen Formel R¹-OH mit einem Moläquivalent des Silans der allgemeinen Formel III ein Gemisch von Organosiliciumverbindungen mit einer mittleren Zusammensetzung gemäß der Formel II hergestellt werden.

Die Umsetzung kann man durch neutrale, saure oder basische Katalysatoren, wie zum Beispiel Salzsäure, Schwefelsäure, Phosphorsäure, Ameisensäure, Essigsäure, para-Toluolsulfonsäure, Natronlauge, Kalilauge, Natriummethylat, Natriumethylat, Ionenaustauscherharze Amberlyst 15, Deloxan ASP I/9 oder Metallverbindungen, insbesondere Titanate, beispielsweise bekannt aus US 2820806, beschleunigen.

Die Reaktion kann man bei Temperaturen zwischen 20 und 200 °C, vorzugsweise zwischen 20 und 150°C, durchführen. Zur Vermeidung von Kondensationsreaktionen kann es vorteilhaft sein, die Reaktion in einer wasserfreien, idealerweise in einer Inertgasatmosphäre, durchzuführen.

Die erfindungsgemäßen Gemische von Organosiliciumverbindungen können als Haftvermittler zwischen anorganischen Materialen (zum Beispiel Glasfasern, Metallen, oxidischen Füllstoffen, Kieselsäuren) und organischen Polymeren (zum Beispiel Duroplasten, Thermoplasten, Elastomeren) beziehungsweise als Vernetzungsmittel und Oberflächenmodifizierungsmittel verwendet werden. Die erfindungsgemäßen Gemische von Organosiliciumverbindungen können als Haftvermittler in mit Kieselsäure und/oder Stärke gefüllten Reifen eingesetzt werden.

Ein weiterer Gegenstand der Erfindung sind Kautschukmischungen, welche dadurch gekenntzeichnet sind, daß sie Kautschuk, Füllstoff, wie beispielsweise gefällte Kieselsäure, gegebenenfalls weitere Kautschukhilfsmittel, sowie mindestens ein erfindungsgemäßes Gemisch von Organosiliciumverbindungen enthalten.

Die erfindungsgemäßen Gemische von Organosiliciumverbindungen können in Mengen von 0,1 bis 20 Gew-%, bezogen auf die Menge des eingesetzten Kautschuks, eingesetzt werden.

Die Zugabe der erfindungsgemäßen Gemische von Organosiliciumverbindungen, sowie die Zugabe der Füllstoffe kann bevorzugt bei Massetemperaturen von 100 bis 200 °C erfolgen. Sie kann jedoch auch später bei tieferen Temperaturen (40 bis 100 °C) zum Beispiel zusammen mit weiteren Kautschukhilfsmitteln erfolgen

Die Gemische von Organosiliciumverbindungen können sowohl in reiner Form als auch aufgezogen auf einen inerten organischen oder anorganischen Träger dem Mischprozeß zugegeben werden. Bevorzugte Trägermaterialien sind Kieselsäuren, Wachse, Thermoplaste, natürliche oder synthetische Silicate, Aluminiumoxid oder Ruße.

Als Füllstoffe können für die erfindungsgemäßen Kautschukmischungen die folgenden Füllstoffe eingesetzt werden:
- Ruße: Die hierbei zu verwendenden Ruße sind nach dem Flammruß-, Furnace- oder Gasruß-Verfahren hergestellt und besitzen BET-Oberflächen von 20 bis 200 m²/g, wie z.B.SAF-,ISAF-, HSAF-, HAF-, FEF- oder GPF-Ruße. Die Ruße können gegebenenfalls auch Heteroatome wie zum Beispiel Si enthalten.
- hochdisperse Kieselsäuren, hergestellt zum Beispiel durch Fällung von Lösungen von Silicaten oder Flammenhydrolyse von Siliciumhalogeniden mit spezifischen Oberflächen von 5 bis 1000, vorzugsweise 20 bis 400 m²/g (BET-Oberfläche) und mit Primärteilchengrößen von 10 bis 400 nm. Die Kieselsäuren können gegebenenfalls auch als Mischoxide mit anderen Metalloxiden, wie Al-, Mg-, Ca-, Ba-, Zn- und Titanoxiden vorliegen.
- Synthetische Silicate, wie Aluminiumsilicat, Erdalkalisilicate wie Magnesiumsilicat oder - Caiciumsilicat, mit BET-Oberflächen von 20 bis 400 m²/g und Primärteilchendurchmessern von 10 bis 400 nm.
- Synthetische oder natürliche Aluminiumoxide und - hydroxide
- Natürliche Silicate, wie Kaolin und andere natürlich vorkommende Kieselsäuren.
- Glasfaser und Glasfaserprodukte (Matten, Stränge) oder Mikroglaskugeln.

Bevorzugt können hochdisperse Kieselsäuren, hergestellt durch Fällung von Lösungen von Silicaten, mit BET-Oberflächen von 20 bis 400 m²/g in Mengen von 5 bis 150 Gew.-Teilen, jeweils bezogen auf 100 Teile Kautschuk, eingesetzt werden.

Die genannten Füllstoffe können alleine oder im Gemisch eingesetzt werden.

In einer besonders bevorzugten Ausführungsform können 10 bis 150 Gew.-Teile helle Füllstoffe, gegebenenfalls zusammen mit 0 bis 100 Gew.-Teilen Ruß, sowie 1 bis 10 Gew.-Teile der erfindungsgemäßen Gemische von Organosiliciumverbindungen der Formel I und / oder II, jeweils bezogen auf 100 Gew.-Teile Kautschuk, zur Herstellung der Mischungen eingesetzt werden.

Für die Herstellung der erfindungsgemäßen Kautschukmischungen eignen sich neben Naturkautschuk auch Synthesekautschuke. Bevorzugte Synthesekautschuke sind beispielsweise bei W. Hofmann, Kautschuktechnologie, Genter Verlag, Stuttgart 1980, beschrieben. Sie umfassen u. a.
- Polybutadien (BR)
- Polyisopren (IR)
- Styrol/Butadien-Copolymerisate mit Styrolgehalten von 1 bis 60, vorzugsweise 2 bis 50 Gew.-% (SBR)
- Isobutylen/Isopren-Copolymerisate (IIR)
- Butadien/Acrylnitril-Copolymere mit Acrylnitrilgehalten von 5 bis 60, vorzugsweise 10 bis 50 Gew.-% (NBR)
- teilhydrierter oder vollständig hydrierter NBR-Kautschuk (HNBR)
- Ethylen/Propylen/Dien-Copolymerisate (EPDM)
sowie Mischungen dieser Kautschuke. Für die Herstellung von Kfz-Reifen sind insbesondere anionisch polymerisierte L-SBR-Kautschuke (Lösungs-SBR) mit einer Glastemperatur oberhalb von -50 °C sowie deren Mischungen mit Dienkautschuken von Interesse.

Die erfindungsgemäßen Kautschukvulkanisate können weitere Kautschukhilfsstoffe enthalten, wie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Verzögerer, Metalloxide sowie Aktivatoren, wie Triethanolamin, Polyethylenglykol, Hexantriol, die der Kautschukindustrie bekannt sind.

Die Kautschukhilfsmittel können in bekannten Mengen, die sich unter anderem nach dem Verwendungszweck richten, eingesetzt werden. Übliche Mengen sind zum Beispiel Mengen von 0,1 bis 50 Gew.-%, bezogen auf Kautschuk. Als Vernetzer können Schwefel oder schwefelspendende Substanzen eingesetzt werden. Die erfindungsgemäßen Kautschukmischungen können darüber hinaus Vulkanisationsbeschleuniger enthalten. Beispiele für geeignete Hauptbeschleuniger sind Mercaptobenzthiazole, Sulfenamide, Thiurame, Dithiocarbamate, besonders bevorzugt Sulfenamide, in Mengen von 0,5 bis 3 Gew.-%. Beispiele für Cobeschleuniger sind Guanidine, Thioharnstoffe und Thiocarbonate in Mengen von 0,5 bis 5 Gew.-%. Schwefel kann üblicherweise in Mengen von 0,1 bis 10 Gew.-%, bevorzugt 1 bis 3 Gew.-%, bezogen auf Kautschuk, eingesetzt werden.

Die Vulkanisation der erfindungsgemäßen Kautschukmischungen kann bei Temperaturen von 100 bis 200 °C, bevorzugt 130 bis 180 °C, gegebenenfalls unter Druck von 10 bis 200 bar erfolgen. Die Abmischung der Kautschuke mit dem Füllstoff, gegebenenfalls Kautschukhilfsmitteln und dem erfindungsgemäßen Gemisch von Organosiliciumverbindungen kann in bekannten Mischaggregaten, wie Walzen, Innenmischern und Mischextrudern, durchgeführt werden.

Die erfindungsgemäßen Kautschukmischungen eignen sich zur Herstellung von Formkörpern, zum Beispiel für die Herstellung von Luftreifen, Reifenlaufflächen, Kabelmänteln, Schläuchen, Treibriemen, Förderbändern, Walzenbelägen, Reifen, Schuhsohlen, Dichtungsringen und Dämpfungselementen.

Die erfindungsgemäßen Gemische von Organosiliciumverbindungen können zusammen mit hochoberflächigen Kieselsäuren mit CTAB 180-220 m²/g in Kautschukmischungen, insbesondere in LKW-Laufflächen, verwendet werden.

Die erfindungsgemäße Kautschukmischung kann für die Herstellung von Reifenlaufflächen mit verbessertem niedrigerem Rollwiderstand, verbesserter Nassrutschfestigkeit und gleichbleibend guten Trockeneigenschaften gegenüber einer gleichen Kautschukmischung, wobei die erfindungsgemäßen Gemische von Organosiliciumverbindungen in einem Molverhältnis bezogen auf die Silicium-Einheiten von 1:1,8 bis 1:2,7 gegen Bis-(3-triethoxysilylpropyl)tetrasulfid ausgetauscht ist, verwendet werden.

Die erfindungsgemäße Kautschukmischung kann für die Herstellung von Reifenlaufflächen mit verbessertem niedrigerem Rollwiderstand und einer verbesserter Nassrutschfestigkeit bei gleichbleibend gutem Abriebswiderstand gegenüber einer gleichen Kautschukmischung, wobei die erfindungsgemäßen Gemische von Organosiliciumverbindungen in einem Molverhältnis bezogen auf die Silicium-Einheiten von 1:1,8 bis 1:2,7 gegen Bis-(3-triethoxysilylpropyl)tetrasulfid ausgetauscht ist, verwendet werden.

Die erfindungsgemäßen Gemische von Organosiliciumverbindungen haben den Vorteil gegenüber Organosiliciumverbindungen gemäß EP 1 285 926, daß die Härte und die dynamische Steifigkeit E* erhöht ist bei gleichbleibendem tan δ 60°C (korreliert mit Rollwiderstand).

Die erfindungsgemäßen Gemische von Organosiliciumverbindungen haben den Vorteil, daß weniger Methanol beziehungsweise Ethanol freigesetzt wird als bei den bekannten Silanen, bei gleichbleibender Reaktivität. Die nichtflüchtigen Alkohole werden aufgrund ihrer Inaktivität nicht von der Organosiliciumverbindung abgetrennt oder verbleiben aufgrund ihrer Nichtflüchtigkeit in der Polymermatrix. Sie gelangen in beiden Fällen nicht in die Umwelt.

Ferner haben die erfindungsgemäßen Gemische von Organosiliciumverbindungen den Vorteil, daß auf die Zugabe von Alkylsilan gemäß DE 10015309 verzichtet werden kann, da bei den erfindungsgemäßen Gemischen von Organosiliciumverbindungen der Formel I und / oder II, eine Verschlechterung der Verarbeitbarkeit, wie im Falle von zum Beispiel 3-Mercaptopropyltrimethoxy- oder 3-Mercaptopropyltriethoxysilan, nicht gefunden wird.

Die erfindungsgemäßen Kautschukmischungen haben den Vorteil gegenüber Bis-(3-triethoxysilylpropyl)-tetrasulfid enthaltenden Kautschukmischungen, daß die dynamische Steifigkeit erniedrigt ist und somit besonders geeignet sind für Winterreifen (weiche Mischung).

### Beispiele:

### Beispiel 1:

Am Rotationsverdampfer werden im 1-Liter-Kolben ein Gemisch bestehend aus 286,1 g 3-Mercaptopropyltriethoxysilan (Formel III mit R = -CH₂CH₃, R² = -CH₂CH₂CH₂-), 313,1 g Dodecanol (R¹ = -C₁₂H₂₅) und 154,4 g 1-Tetradecanol (R¹ = -C₁₄H₂₉) mit 140 µl Tetra-n-butyl-orthotitanat auf 110 °C erhitzt und entstehendes Ethanol innerhalb von 4 h im Vakuum bei 40 mbar abdestilliert. Man erhält 636,86 g (99,0%) einer farblosen Flüssigkeit der Formel I mit R = -CH₂CH₃, R¹ = -C_{12,6}H_{26,2}, R² = -CH₂CH₂CH₂-).

### Beispiel 2:

### Herstellung und Untersuchung der erfindungsgemäßen Kautschukmischungen

Die für die Kautschukmischungen verwendete Rezeptur ist in der folgenden Tabelle 1 angegeben. Dabei bedeutet die Einheit phr Gewichtsanteile, bezogen auf 100 Teile des eingesetzten Rohkautschuks. Die erfindungsgemäßen Gemische von organosiliciumverbindungen werden equimolar zu 3-Mercaptopropyltriethoxysilan bezogen auf Silicium dosiert. Das allgemeine Verfahren zur Herstellung von Kautschukmischungen und deren Vulkanisate ist in dem Buch: "Rubber Technology Handbook", W. Hofmann, Hanser Verlag 1994 beschrieben.

**Tabelle 1**

| | Mischung 1 Referenz | Mischung 2 Referenz | Mischung 3 |
|---|---|---|---|
| 1.Stufe | | | |
| Buna VSL 5025-1 | 96 | 96 | 96 |
| Buna CB 24 | 30 | 30 | 30 |
| Ultrasil 7000 GR | 80 | 80 | 80 |
| 3-Mercaptopropyl triethoxysilan | 2,4 | - | - |
| VP Si 208 | 2,5 | - | - |
| Organosilicium-verbindungen gemäß Beispiel 10 EP 1 285 926 | - | 5,7 | - |
| Organosilicium-verbindungen Gemisch von gemäß Beispiel 1 | - | - | 5, 4 |
| ZnO | 2 | 2 | 2 |
| Stearinsäure | 2 | 2 | 2 |
| Naftolen | 10 | 10 | 10 |
| Vulkanox 4020 | 1,5 | 1,5 | 1,5 |
| Protektor G35P | 1 | 1 | 1 |

| 2.Stufe | | | |
|---|---|---|---|
| Batch Stufe 1 | | | |

| 3.Stufe | | | |
|---|---|---|---|
| Batch Stufe 2 | | | |
| Vulkacit D | 2 | 2 | 2 |
| Vulkazit CZ | 1,5 | 1,5 | 1,5 |
| TBzTD | 0,2 | 0,2 | 0,2 |
| Schwefel | 2,3 | 2,3 | 2,3 |

Bei dem Polymer VSL 5025-1 handelt es sich um ein in Lösung polymerisiertes SBR-Copolymer der Bayer AG mit einem Styrolgehalt von 25 Gew.-% und einem Butadiengehalt von 75 Gew.-%. Das Copolymer enthält 37,5 phr Öl und weist eine Mooney-Viskosität (ML 1+4/100°C) von 50 ±4 auf.

Bei dem Polymer Buna CB 24 handelt es sich um ein cis 1,4-Polybutadien (Neodymtyp) der Bayer AG mit cis 1,4-Gehalt von mindestens 97 % und einer Mooney-Viskosität von 44 ±5.

Als aromatisches Öl wird Naftolen ZD der Chemetall verwendet. Bei Vulkanox 4020 handelt es sich um 6PPD der Bayer AG und Protektor G35P ist ein Ozonschutzwachs der HB-Fuller GmbH. Vulkacit D (DPG) und Vulkazit CZ (CBS) sind Handelsprodukte der Bayer AG.

Ultrasil 7000 GR ist eine gut dispergierbare gefällte Kieselsäure der Degussa AG mit einer BET Oberfläche von 170 m²/g. 3-Mercaptopropyltriethoxysilan, wird von der Firma ABCR GmbH CoKG hergestellt und VP Si 208, Octyltriethoxysilan, ist ein Handelsprodukte der Degussa AG.

Die Kautschukmischungen werden in einem Innenmischer entsprechend der Mischvorschrift in Tabelle 2 hergestellt.

**Tabelle 2**

| **Stufe 1** | |
|---|---|
| **Einstellungen** | |
| Mischaggregat | Werner & Pfleiderer E-Typ |
| Drehzahl | 70 min ⁻¹ |
| Stempeldruck | 5,5 bar |
| Leervolumen | 1,58 L |
| Füllgrad | 0,56 |
| Durchflußtemp | 80°C |

| **Mischvorgang** | |
|---|---|
| 0 bis 1 min | Buna VSL 5025-1 + Buna CB 24 |
| 1 bis 3 min | 1/2 Füllstoff, ZnO, Stearinsäure,Naftolen ZD, Organosiliciumverbindungen |
| 3 bis 4 min | 1/2 Füllstoff, Alterungsschutz |
| 4 min | Säubern |
| 4 bis 5 min | Mischen, |
| 5 min | Säubern |
| 5 bis 6 min | Mischen und Ausfahren |
| | |
| Batch-Temp. | 145-150°C |
| Lagerung | 24 h bei Raumtemperatur |

| **Stufe 2** | |
|---|---|
| **Einstellungen** | |
| Mischaggregat | wie in Stufe 1 bis auf: |
| Drehzahl | 80 min ⁻¹ |
| Füllgrad | 0,53 |

| **Mischvorgang** | |
|---|---|
| 0 bis 2 min | Batch Stufe 1 aufbrechen |
| 2 bis 5 min durch | Batchtemperatur 140-150°C |
| | |
| 5 min | Drehzahlvariation halten Ausfahren |
| | |
| Batch-Temp. | 150°C |
| Lagerung | 4 h bei Raumtemperatur |

| **Stufe 3** | |
|---|---|
| **Einstellungen** | |
| Mischaggregat | wie in Stufe 1 bis auf |
| Drehzahl | 40 min ⁻¹ |
| Füllgrad | 0,51 |
| Durchflußtemp | 50°C |

| **Mischvorgang** | |
|---|---|
| 0 bis 2 min | Batch Stufe 2, Beschleuniger, Schwefel |
| | |
| 2 min | ausfahren und auf Labormischwalzwerk Fell bilden, (Durchmesser 200 mm, Länge 450 mm, Duchflußtemperatur 50°C) |
| | |
| | Homogenisieren: 3* links, 3* rechts einschneiden und umklappen sowie 8* bei engem Walzenspalt (1 mm) und 3* bei weitem Walzenspalt (3,5 mm) stürzen Fell ausziehen |
| Batch-Temp | 85-95°C |

In Tabelle 3 sind die Methoden für die Gummitestung zusammengestellt.

**Tabelle 3**

| Physikalische Testung | Norm/Bedingungen |
|---|---|
| ML 1+4, 100°C, 3. Stufe | DIN 53523/3, ISO 667 |
| Vulkameterprüfung, 165°C t10% und t90% (min) | DIN 53529/3, ISO6502 |
| Zugversuch am Ring, 23°C | DIN 53504, ISO 37 |
| Zugfestigkeit (MPa) | |
| Spannungswerte (MPa) | |
| Bruchdehnung (%) | |
| Shore-A-Härte, 23°C (SH) | DIN 53 505 |
| Viskoelastische Eigenschaften, 0 und 60°C, 16 Hz, 50 N Vorkraft und 25 N Amplitudenkraft Dynamischer Modul E^{*} (MPa) Verlustfaktor tan δ () | DIN 53 513, ISO2856 |
| Ball Rebound, 60°C (%) | ASTM D 5308 |
| Goodrich Flexometer | DIN 53 533, |
| 0,25inch Hub, 25 Min., 23°C Kontakttemperatur (°C) Einstichtemperatur (°C) Permanent Set (%) | ASTM D 623 A |
| DIN-Abrieb, 10 N Kraft (mm³) | DIN 53 516 |

Tabelle 4 zeigt die Ergebnisse der gummitechnischen Prüfung. Die Mischungen werden 20 min bei 165°C vulkanisiert.

**Tabelle 4**

| **Rohmischungsergebnisse** | | 1 | 2 | 3 |
|---|---|---|---|---|
| Merkmale | Einheit | | | |
| ML(1+4) bei 100 °C, 3. Stufe | [MU] | 69 | 62 | 72 |
| MDR, 165°C, 0,5° | | | | |
| t 10 % | [min] | 0,8 | 1,0 | 0,8 |
| t 90 % | [min] | 5,9 | 15,6 | 16,8 |

| **Vulkanisatergebnisse** | | | | |
|---|---|---|---|---|
| Zugversuch am Ring | | | | |
| Spannungswert 100% | [MPa] | 2,1 | 2,1 | 2,4 |
| Spannungswert 200% | [MPa] | 6,7 | 7,1 | 7,5 |
| Spannungswert 300% | [MPa] | 13,8 | - | - |
| Spannungswert 300%/100% | [-] | 6,6 | - | - |
| Zugfestigkeit | [MPa] | 14,1 | 12,7 | 13,2 |
| Bruchdehnung | [%] | 300 | 270 | 280 |
| Shore-A-Härte | [SH] | 58 | 55 | 61 |
| Ball-Rebound 60°C | [%] | 69,0 | 70,2 | 69,7 |
| DIN-Abrieb | [mm³] | 62 | 34 | 50 |
| Goodrich-Flexometer | [°C] | 49 | 52 | 52 |
| Kontakttemperatur | [°C] | 87 | 91 | 90 |
| Einstichtemperatur | [%] | 1,5 | 1,3 | 1,7 |
| Permanent Set | | | | |
| MTS | [MPa] | 12,2 | 10,0 | 12,3 |
| Dynamischer Modul E^{*}, 0°C | [MPa] | 6,3 | 5,9 | 6,8 |
| Dynamischer Modul E^{*}, 60°C | [-] | 0,471 | 0,413 | 0,428 |
| Verlustfaktor tan δ, 0°C | [-] | 0,086 | 0,083 | 0,084 |
| Verlustfaktor tan δ, 60°C | | | | |

Wie man anhand der Tabelle 4 erkennt, weist Mischung 3 mit dem erfindungsgemäßen Gemisch von Organosiliciumverbindungen eine gute Hydrophobierung und Verstärkung auf. Insbesondere sind die Spannungswerte und Shore-A-Härte der erfindungsgemäßen Mischung 3 gegenüber den Referenzmischungen erhöht. Zusätzlich ist die dynamische Steifigkeit (dynamischer Modul E*) der erfindungsgemäßen Mischung 3 höher, bei nahezu gleichbleibendem Verlustfaktor tan δ 60°C, gegenüber der Referenzmischung 2. Die erfindungsgemäße Mischung 3 erzielt auch ohne den Zusatz von Alkylsilan nahezu gleiche dynamische Steifigkeit und tanδ 60°C-Werte als Mischung 1 mit Alkylsilan.

### Beispiel 3:

Im 1-Liter-Dreihalskolben mit Destillationsaufsatz werden bei Raumtemperatur 268,08 g 3-Mercaptopropyltriethoxysilan und ein Gemisch aus 313,05 g 1-Dodecanol und 154,36 g 1 Teträdecanol vorgelegt und mit 1,0 g p-Toluolsulfonsäuremonohydrat versetzt. Die Lösung wird auf 120 °C erhitzt. Das entstehende Ethanol wird kontinuierlich abdestilliert. Anschließend wird am Rotationsverdampfer im Vakuum bei 80 °C und 20 mbar abdestilliert. Man erhält 638,7 g (99%) einer farblosen Flüssigkeit gemäß der Formel I mit R = -CH₂CH₃, R¹= Gemisch aus -C₁₂H₂₅ und -C₁₄H₂₉ im Verhältnis 2:1 und R²= -CH₂CH₂CH₂-.

### Beispiel 4:

### Herstellung und Untersuchung der erfindungsgemäßen Kautschukmischungen

Die für die Kautschukmischungen verwendete Rezeptur ist in der folgenden Tabelle 5 angegeben. Das erfindungsgemäße Gemisch von Silanen wird equimolar zu Si 69 bezogen auf Silicium dosiert. Die Schwefelanpassung ist notwendig, um den geringeren Schwefelgehalt der erfindungsgemäßen Gemische von Organosiliciumverbindungen zu kompensieren.

**Tabelle 5**

| **Grundmischung** | **A** | **B** |
|---|---|---|
| Kautschukblend ¹⁾: S-SBR / BR / NR | 100 | 100 |
| Hochdispersible Kieselsäure ²⁾ | 80 | 80 |
| Ruß ³⁾ | 6,6 | 6,6 |
| Aromatischer Weichmacher | 30 | 24 |
| Si 69 ⁴⁾ | 6,6 | --- |
| Gemisch von Organosiliciumverbindungen gemäß Bsp. 3 | --- | 5,95 |
| Chemikalien⁵⁾ | | |
| | | |

| **Fertigmischung** | **A** | **B** |
|---|---|---|
| Mahlschwefel | 2,0 | 2,8 |
| Beschleunigermischung ⁶⁾ | | |

| | | |
|---|---|---|
| 1) S-SBR: in Lösung polymerisiertes SBR-Copolymer mit 25% Styrol; BR: Polybutadien mit mindestens 97% 1,4-Butadieneinheiten; NR: Naturkautschuk | | |
| 2) CTAB Oberfläche 160 m²/g ± 15 | | |
| 3) N300-Serie für Reifenlauffläche | | |
| 4) Bis-(3-triethoxysilypropyl)tetrasulfid, Handelsprodukt der Degussa AG | | |
| 5) Zinkoxid, Stearinsäure, Wachs, Alterungsschutzmittel | | |
| 6) Bestehend aus einem Sulfenamidbeschleuniger und einem Cobeschleuniger | | |

Die Kautschukmischungen werden vierstufig in einem Innenmischer hergestellt. Alle Bestandteile der Grundmischung werden in der ersten Mischstufe gemischt, gefolgt von zwei Zwickstufen und einer Endstufe in der die Beschleuniger und der Schwefel zugegeben werden. Die Mischtemperaturen der ersten drei Mischstufen liegen im Bereich von 140-160°C und die Temperatur der vierten Stufe <120°C.

In Tabelle 6 sind die Methoden für die Gummitestung zusammengestellt.

**Tabelle 6**

| Physikalische Testung | Norm/Bedingungen |
|---|---|
| ML 1+4, 100°C, 3. Stufe | DIN 53523/3, ISO 667 |
| Vulkameterprüfung, 165°C Dmax-Dmin (dNm) t10% und t90% (min) | DIN 53529/3, ISO 6502 |
| Zugversuch am Ring, 23°C Zugfestigkeit (MPa) Spannungswerte (MPa) RF (Spannungswert 300% / Spannungswert 100%) Bruchdehnung (%) | DIN 53504, ISO 37 |
| Shore-A-Härte, 23°C (SH) | DIN 53 505 |
| Viskoelastische Eigenschaften, 0 und 60°C, 16 Hz, 50 N Vorkraft und 25 N Amplitudenkraft Dynamischer Modul E* (MPa) Verlustfaktor tan δ () | DIN 53 513, ISO 2856 |
| Goodrich Flexometer 0,25inch Hub, 25 Min., 23°C Einstichtemperatur (°C) | DIN 53 533, ASTM D 623 |
| | |
| DIN-Abrieb, 10 N Kraft (mm³) | DIN 53 516 |

Tabelle 7 zeigt die Ergebnisse der gummitechnischen Prüfung. Die Mischungen werden 10 min bei 165°C vulkanisiert.

**Tabelle 7**

| **Rohmischungsdaten** | **Einheit** | **A** | **B** |
|---|---|---|---|
| ML (1+4) | [-] | 50 | 49 |
| Dmax-Dmin | [dNm] | 20,5 | 15,2 |
| t10% | [min] | 2,0 | 1,1 |
| t90% | [min] | 5,1 | 3,8 |

| **Vulkanisatdaten** | **Einheit** | **A** | **B** |
|---|---|---|---|
| Zugfestigkeit | [MPa] | 13,5 | 12,6 |
| Spannungswert 100% | [MPa] | 2,8 | 2,0 |
| Spannungswert 300% | [MPa] | 10,0 | 9,5 |
| RF | [-] | 3,6 | 4,8 |
| Bruchdehnung | [%] | 390 | 370 |
| Shore-A-Härte | [-] | 74 | 63 |
| E^{*} (60°C) | [MPa] | 9,2 | 7,8 |
| tan δ (60°C) | [-] | 0,142 | 0,111 |
| tan δ (0°C) | [-] | 0,392 | 0,346 |
| Einstichtemperatur | [°C] | 134 | 122 |
| DIN-Abrieb | [mm³] | 59 | 49 |

Wie man anhand der Daten in den Tabelle 7 erkennen kann, liegt die Mooney-Viskosität der erfindungsgemäßen Mischung B auf dem Niveau der Referenzmischung A. Die Mischungen B zeichnet sich insbesondere durch eine niedrige dynamische Steifigkeit (E*),einen hohen Verstärkungsfaktor (RF) bei erniedrigtem DIN-Abrieb und einem reduzierten Hystereseverlust (tan δ, Einstichtemperatur) aus.

Mit den beiden Laufflächenmischungen A und B werden die Testreifen A und B der Größe 205 / 65R15 94V gebaut und diese von Smithers Scientific Services Inc. getestet. Tabelle 8 gibt die verwendeten Testarten und Testbedingungen wieder. Die Straßentests werden mit einem BMW 528i gefahren. Der fordere Reifendruck ist 2,1 bar, der hintere Reifendruck 2,5 bar. Die Zuladung vorne ist 903 kg , hinten 911 kg . Das relative Rating des Testreifens B mit der erfindungsgemäßen Mischung B bezogen auf den Referenzreifen A ist in Tabelle 9 gezeigt. Werte größer 100 bedeuten eine verbesserung.

**Tabelle 8**

| | |
|---|---|
| Rollwiderstand | ASTM J-1269; 572 kg , 2,0 bar |
| ABS-Nassbremsen | Stopdistanz von 80 km/h |
| ABS-Trockenbremsen | Stopdistanz von 80 km/h |
| Nasshandling | Rundenzeit für Kurvenstrecke (Figur 1) |
| Trockenhandling | Rundenzeit für Kurvenstrecke (Figur 1) |

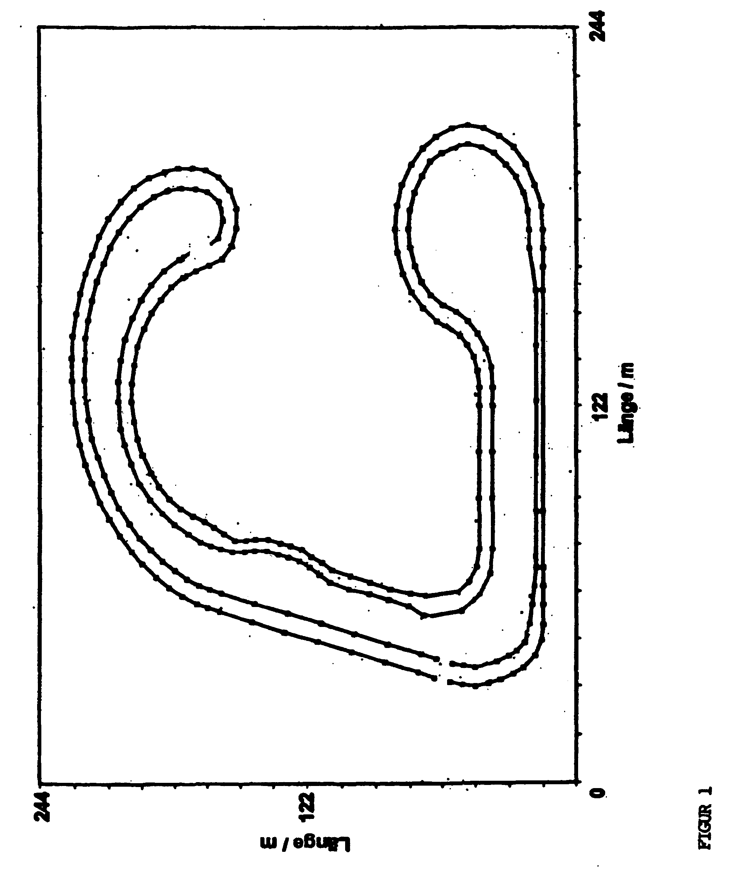

Figur 1 zeigt die Kurvenstrecke.

**Tabelle 9**

| | **Testreifen B** |
|---|---|
| Rollwiderstand | 105 |
| ABS-Nassbremsen | 103 |
| ABS-Trockenbremsen | 100 |
| Nasshandling | 99 |
| Trockenhandling | 99 |
| Figur 1 zeigt die Kurvenstrecke. | |

Wie man erkennt wird der Reifenrollwiderstand und das ABS-Naßbremsen signifikant verbessert. Die Handlingeigenschaften sind im Rahmen der üblichen Schwankungen gleich. Der DIN-Abriebswert in Tabelle 7 zeigt einen verbesserten Abriebswert an.

## Patentansprüche

1. Gemische von Organosiliciumverbindungen der allgemeinen Formel I und / oder II 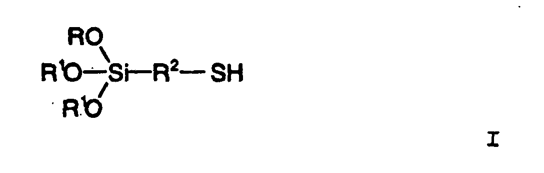 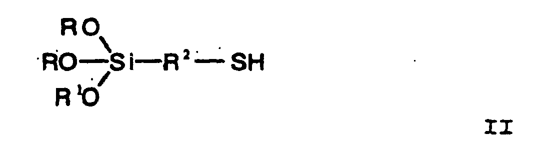 wobei R eine Methyl- oder Ethyl-Gruppe ist,
R¹ gleich oder verschieden und eine C₉-C₃₀ verzweigte oder unverzweigte einbindige Alkylgruppe ist,
R² eine verzweigte oder unverzweigte, gesättigte oder ungesättigte, aliphatische, aromatische oder gemischt aliphatische /aromatische zweibindige C₁-C₃₀ Kohlenwasserstoffgruppe ist,
**dadurch gekennzeichnet, daß** das Gemisch verschiedene Komponenten mit unterschiedlichen R'-Gruppen enthält und der Anteil einer Komponente des Gemisches 10 bis 50 Mol-% beträgt.

2. Gemische von Organosiliciumverbindungen gemäß Anspruch 1, **dadurch gekennzeichnet, daß** R² CH₂, CH₂CH₂, CH₂CH₂CH₂, CH₂CH₂CH₂CH₂, CH(CH₃), CH₂CH(CH₃), C(CH₃)₂, CH(C₂H₅), CH₂CH₂CH(CH₃), CH₂CH(CH₃)CH₂ oder 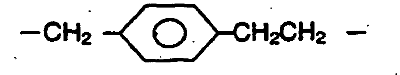 bedeutet.

3. Verfahren zur Herstellung von Gemische von Organosiliciumverbindungen gemäß Anspruch 1, **dadurch gekennzeichnet, daß** man Silane der allgemeinen Formel III 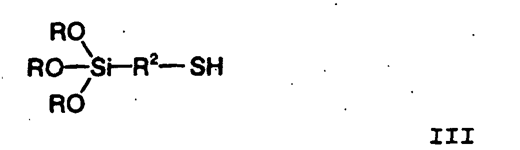 in der R und R² die oben angegebene Bedeutung aufweisen, mit Gemischen von Alkoholen der allgemeinen Formel R¹-OH, in der R¹ die oben angegebene Bedeutung aufweist und verschieden ist, unter Abspaltung von R-OH, umsetzt und R-OH durch Destillation kontinuierlich vom Reaktionsgemisch abtrennt.

4. Verwendung von Gemische von Organosiliciumverbindungen gemäß Anspruch 1 in Kautschukmischungen.

5. Kautschukmischungen, **dadurch gekennzeichnet, daß** sie Kautschuk, Füllstoff, gegebenenfalls weitere Kautschukhilfsmittel, sowie mindestens ein Gemisch von Organosiliciumverbindungen gemäß Anspruch 1 enthalten.

6. Verwendung von Gemische von Organosiliciumverbindungen gemäß Anspruch 1 zur Herstellung von Formkörper.

7. Verwendung von Gemische von Organosiliciumverbindungen gemäß Anspruch 1 in Luftreifen, Reifenlaufflächen, Kabelmänteln, Schläuchen, Treibriemen, Förderbändern, Walzenbelägen, Reifen, Schuhsohlen, Dichtungsringen und Dämpfungselementen.

8. Verwendung der Kautschukmischung gemäß Anspruch 5 zur Herstellung von Reifenlaufflächen mit erniedrigtem Rollwiderstand, verbesserter Nassrutschfestigkeit und gleichbleibend guten Trockeneigenschaften gegenüber einer gleichen Kautschukmischung, wobei die Gemische von Organosiliciumverbindungen gemäß Anspruch 1 in einem Molverhältnis bezogen auf die Silicium-Einheiten von 1:1,8 bis 1:2,7 gegen Bis-(3-triethoxysilylpropyl)tetrasulfid ausgetauscht ist.

9. Verwendung der Kautschukmischung gemäß Anspruch 5 zur Herstellung von Reifenlaufflächen mit verbessertem niedrigeren Rollwiderstand und eine verbesserte Nassrutschfestigkeit bei gleichbleibend gutem Abriebswiderstand gegenüber einer gleichen Kautschukmischung, wobei die Gemische von Organosiliciumverbindungen gemäß Anspruch 1 in einem Molverhältnis bezogen auf die Silicium-Einheiten von 1:1,8 bis 1:2,7 gegen Bis-(3-triethoxysilylpropyl)tetrasulfid ausgetauscht ist.

10. Gemische von Organosiliciumverbindungen gemäß Anspruch 1, **dadurch gekennzeichnet, daß** diese auf einen inerten organischen oder anorganischen Träger aufgezogen sind.

## Claims

1. Mixtures of organosilicon compounds having the general formula I and / or II 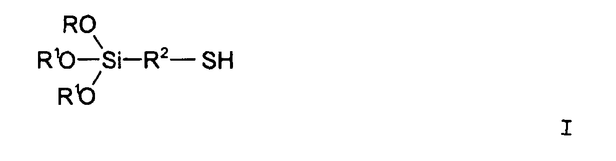 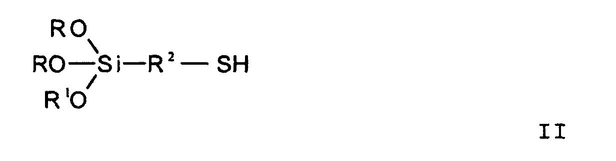 wherein R is a methyl or ethyl group,
R¹ is the same or different and a C₉-C₃₀ branched or unbranched monovalent alkyl group,
R² is a branched or unbranched, saturated or unsaturated, aliphatic, aromatic or mixed aliphatic /aromatic divalent C₁-C₃₀ hydrocarbon group, **characterised in that** the mixture contains various components having differing R¹ groups and the proportion of one component of the mixture is 10 to 50 mol%.

2. Mixtures of organosilicon compounds according to claim 1, **characterised in that** R² denotes CH₂, CH₂CH₂, CH₂CH₂CH₂, CH₂CH₂CH₂CH₂, CH(CH₃), CH₂CH(CH₃), C(CH₃)₂, CH(C₂H₅), CH₂CH₂CH(CH₃), CH₂CH(CH₃)CH₂ or

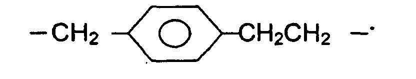

3. Process for the production of mixtures of organosilicon compounds according to claim 1, **characterised in that** silanes having the general formula III 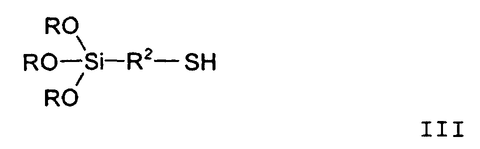 wherein R and R² have the meaning cited above, are reacted with mixtures of alcohols having the general formula R¹-OH, wherein R¹ has the meaning cited above and is different, with elimination of R-OH, and R-OH is continuously separated off from the reaction mixture by distillation.

4. Use of mixtures of organosilicon compounds according to claim 1 in rubber compounds.

5. Rubber compounds **characterised in that** they contain rubber, filler, optionally other rubber auxiliary substances and at least one mixture of organosilicon compounds according to claim 1.

6. Use of mixtures of organosilicon compounds according to claim 1 for the production of moulded parts.

7. Use of mixtures of organosilicon compounds according to claim 1 in pneumatic tyres, tyre treads, cable sheaths, hoses, drive belts, conveyor belts, roll coverings, tyres, shoe soles, sealing rings and damping elements.

8. Use of the rubber compound according to claim 5 for the production of tyre treads with reduced rolling resistance, improved wet skid resistance and equally good dry performance as compared with a similar rubber compound in which the mixtures of organosilicon compounds according to claim 1 are exchanged for bis-(3-triethoxysilylpropyl) tetrasulfide in a molar ratio relative to the silicon units of 1:1.8 to 1:2.7.

9. Use of the rubber compound according to claim 5 for the production of tyre treads with improved, lower rolling resistance and improved wet skid resistance with equally good abrasion resistance as compared with a similar rubber compound in which the mixtures of organosilicon compounds according to claim 1 are exchanged for bis-(3-triethoxysilylpropyl) tetrasulfide in a molar ratio relative to the silicon units of 1:1.8 to 1:2.7.

10. Mixtures of organosilicon compounds according to claim 1, **characterised in that** these are applied to an inert organic or inorganic support.

## Revendications

1. Mélanges de composés organosiliciques de formule générale I ek/ou II 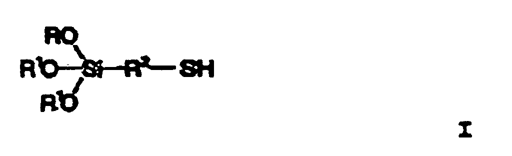 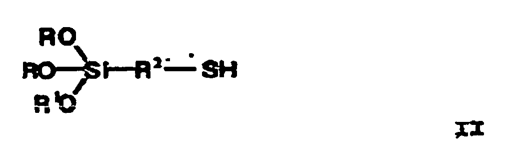 dans laquelle R représente un groupe méthyle ou éthyle, R¹ est identique ou différent et représente un groupe alkyle à une liaison en C₉₋₃₀ ramifié ou non ramifié, R² un groupe hydrocarboné ramifié ou non ramifié, saturé ou non saturé, aliphatique, aromatique ou mélange aliphatique/aromatique à deux liaisons en C₁ à C₃₀,
**caractérisés en ce que**
le mélange contient différents composants avec différents groupes R¹ et la proportion d'un composant du mélange est de 10 à 50 % molaire.

2. Mélanges de composés organosiliciques selon la revendication 1, **caractérisés en ce que**
R² représente un radical CH₂, CH₂CH₂, CH₂CH₂CH₂, CH₂CH₂CH₂CH₂, CH(CH₃), CH₂CH-CH₃, C(CH₃)₂, CH(C₂H₅), CH₂CH₂CH(CH₃), CH₂CH(CH₃)CH₂ ou

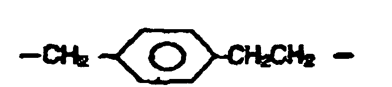

3. Procédé de fabrication de mélanges de composés organosiliciques selon la revendication 1,
**caractérisé en ce qu'**
on convertit des silanes de formule générale III 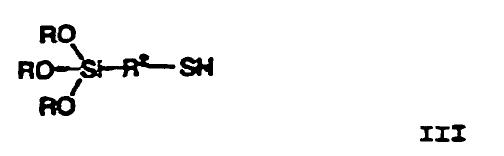 dans laquelle R et R² ont la signification indiquée ci-dessus, avec des mélanges d'alcools de formule générale R¹-OH, dans laquelle R¹ a la signification indiquée ci-dessus et est différent, avec élimination de R-OH et on sépare R-OH en continu du mélange réactionnel par distillation.

4. Utilisation de mélanges de composés organosiliciques selon la revendication 1, dans des mélanges de caoutchoucs.

5. Mélanges de caoutchoucs,
**caractérisés en ce qu'**
ils contiennent du caoutchouc, une charge, le cas échéant d'autres excipients pour le caoutchouc, ainsi qu'au moins un mélange de composés organosiliciques selon la revendication 1.

6. Utilisation de mélanges de composés organosiliciques selon la revendication 1, pour fabriquer des corps moulés.

7. Utilisation de mélanges de composés organosiliciques selon la revendication 1, dans des pneus, des bandes de roulement de pneus, des gaines de câble, des tuyaux, des courroies de commande, des bandes transporteuses, des garnitures de rouleaux, des bandages, des semelles de chaussures, des joints d'étanchéité et des éléments amortisseurs.

8. Utilisation du mélange de caoutchoucs selon la revendication 5, pour fabriquer des bandes de roulement de pneus ayant une résistance au roulement réduite, une résistance améliorée au dérapage sur chaussée mouillée et des propriétés sur chaussée sèche toujours aussi bonnes par rapport à un mélange de caoutchoucs identique, les mélanges de composés organosiliciques selon la revendication 1 étant remplacés par du tétrasulfure de bis-(3-triéthoxysilylpropyle) dans un rapport molaire de 1/1,8 à 1/2,7 par rapport aux unités de silicium.

9. Utilisation du mélange de caoutchoucs selon la revendication 5, pour fabriquer des bandes de roulement de pneus ayant une résistance au roulement réduite améliorée et une résistance au dérapage sur chaussée mouillée améliorée avec une résistance à l'abrasion toujours aussi bonne par rapport à un mélange de caoutchoucs identique, les mélanges de composés organosiliciques selon la revendication 1 étant remplacés par du tétrasulfure de bis-(3-triéthoxysilylpropyle) dans un rapport molaire de 1/1,8 à 1/2,7 par rapport aux unités de silicium.

10. Mélanges de composés organosiliciques selon la revendication 1,
**caractérisé en ce que**
ceux-ci sont appliqués sur un support inerte organique ou inorganique.
